# EUROPEAN PATENT SPECIFICATION

(11) **EP 2 010 588 B1**
(45) Date of publication and mention of the grant of the patent: **04.01.2012**
(21) Application number: 07728187.1
(22) Date of filing: 17.04.2007
(51) Int. Cl.: C08G 18/61, C08G 77/458, C08G 18/38

(54) **Organosilicon polyurea polymers, elastomers manufactured therefrom and their use**
Organosilikon-Polyharnstoff basierte Polymere, daraus hergestellte Elastomere und deren Verwendung
polymère à base de polyurée et d'organosilicium, elastomère préparé a partir de celui-ci et sa utilisation

(30) Priority: 18.04.2006 CN 200610077021; 26.04.2006 CN 200610077100
(43) Date of publication of application: 07.01.2009
(73) Proprietor: Henkel AG & Co. KGaA, 40589 Düsseldorf (DE)
(72) Inventor: JIA, Xudong, Nanjing 210036 (CN); XI, Kai, Nanjing 210036 (CN); GE, Renjie, Baoshan District, Shanghai City, 200429 (CN); YU, Xuehai, Nanjing 210093 (CN)
(86) International application number: PCT/EP2007/053724
(87) International publication number: WO 2007/118880

(56) References cited:
- WO-A-96/34030
- WO-A-03/018704
- WO-A-2006/010486
- WO-A-2006/021371

## Description

### Technical field

The present invention relates to self-crosslinking organosilicon-polyurea base polymer, elastomer prepared therefrom, preparation thereof and use of the same. The elastomer prepared from the base polymer can be widely used in the fields of adhesives, sealants, gaskets, buffer layers and coatings, in particular used for sealants in the automobile industry.

### Background technology

With the continued development of the modern automobile industry, requirements for high-performance functional materials have become ever more rigorous. For example, sealants used for automobile parts, such as oil pipes and hoods, not only should have good sealing properties, but also should be high- and low-temperature resistant, solvent resistant, stretchable, and curable at room temperature. And the requirements on volatile organic content of such materials used as sealants have become more rigorous and complex due to the regulations that need to be considered when various countries pay increasingly more attention to environmental protection. Although many organizations are studying high-performance self-crosslinking sealant materials at present, the need continues to exist for such sealant materials and most methods for preparation thereof are very complicated.

There are many reports about the use of polyurethane and polyurea materials as sealants and adhesives, for instance, (1) R. H. Baney, M. Itoh, A. Sakakibara, and T. Suzuki, Chem. Rev., 95:1409 (1995); (2) Zhang, T, Xi, K. Chen, H, et al. J APPL POLYM SCI 91(1): 190-195 JAN 5 2004; and (3) X. H. Yu, M. R. Nagarajan, T. G. Grasel, P. E. Gibson, and S. L. Cooper, J. Polym. Sci.: Polym. Phys. Ed., 23:2319. However, those materials that use polyethers as soft segments do not have satisfactory high- and low-temperature resistance, and are easily deformed by swelling in organic solvent. Although silane coupling agents have been used in room temperature curable materials, due to its too high strength after crosslinking, the resulting material has little elasticity, and is easily ruptured and broken off. As for epoxy resins, they do not have enough high- and low-temperature resistance to be suitable for use In automobile assembly applications. And polyimides, while having many beneficial physical properties, are viewed by the industry as simply being too expensive to be of practical benefit.

Methods for synthesizing polysiloxane/polyurea block copolymers have been reported, for example, (1) U.S. Patent No. 6,407,195; and (2) Siloxane-Urea Segmented Copolymers, I. Yilgor, J. E. McGrath, Polymer Bulletin 8, 535-550, 1982. However, the block polymers obtained in these reported activities have only terminal crosslinking groups, which restrict their ability to crosslink in forming polymeric structure.
Furthermore, WO 2006/010486 A1 describes crosslinkable polysiloxane-urea copolymers, a method for the production of these materials, their vulcanization for example due to humidity action and their use in different applications.
WO 2006/021371 A1 relates to radiation-crosslinkable organopolysiloxane polyurea block copolymers, methods to produce these polymers and to the use thereof.

### Summary of the invention

The present invention provides a method for preparing an organosilicon-polyurea base polymer capable of self-crosslinking under humid conditions, which may be in the form of sol with organic solvent, and which is curable at room temperature (about 25°C).

The present invention also provides an elastomer obtained by crosslinking the organosilicon-polyurea base polymer prepared by the method according to the invention, which satisfies the requirements in practical use with respect to high- and low-temperature resistance, solvent resistance and tensile properties,

The present invention also provides the use of the organosilicon-polyurea base polymer prepared by the method according to the invention and the elastomer prepared therefrom in the fields of adhesives, sealants, gaskets, buffer layers and coatings.

The term "self-crosslinking" used herein refers to that the polymer involved is able to crosslink in the presence of environmental humidity, without adding an additional crosslinking agent.

The term "base polymer," used herein refers to the polymer that can be subjected to further crosslinking, thereby forming a polymeric final product.

The term "elastic" used herein refers to that the polymer involved can correspondingly deform (be sheared, compressed or elongated) under the action of an outside force, and can rapidly resume almost original length or shape after removing the outside force.

The term "reactive components for forming the base polymer" refers to all reactive substances taking part in the preparation of the organosilicon-polyurea base polymer, with catalyst component included (if any).

By the present invention there is provided a method for preparing an organosilicon-polyurea base polymer capable of crosslinking under humid condition, which is characterized by the following formula: 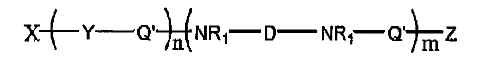 where:
m, n are respectively an integer from 1 to 750;
Q'= CO-NR-Q-NR-CO, where: Q is a divalent moiety selected from C₆-C₂₀ arylene radical, C₆-C₂₀ aralkylene radical, C₁-C₂₀ alkylene radical, C₆-C₂₀ cycloalkylene, and combinations thereof; and R Is hydrogen or C₁-C₁₂ alkyl radical;
R₁ is selected from hydrogen, C₁-C₁₂ alkyl radical, C₆-C₂₀ cycloalkyl radical, C₆-C₂₀ aryl radical, C₆-C₂₀ aralkyl radical, C₆-C₂₀ alkaryl radical and combinations thereof;
Y is embraced by the structure: 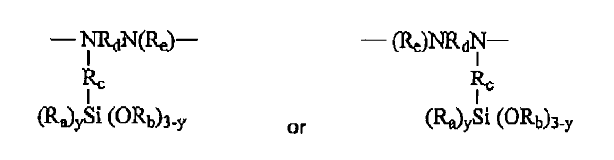 where: Rₐ and R_{b} are respectively selected from C₁-C₁₆ alkyl radical, C₆-C₂₀ aryl radical, C₆-C₂₀ aralkyl radical, C₆-C₂₀ alkaryl radical, and combinations thereof; y = 0 to 3; R_{c} is a divalent moiety selected from C₁-C₁₂ alkylene radical, C₁-C₁₂ imino-containing alkylene radical, C₆-C₂₀ imino-containing arylene radical, C₆-C₂₀ aralkylene radical, C₆-C₂₀ alkarylene radical, and combinations thereof;
R_{d} is a direct bond, or a divalent moiety selected from C₁-C₁₂ alkylene radical, C₁-C₁₂ imino-containing alkylene radical, C₆-C₂₀ imino-containing arylene radical, C₆-C₂₀ aralkylene radical, C₆-C₂₀ alkarylene radical, and combinations thereof; and
R₉ is selected from hydrogen, C₁-C₁₂ alkyl radical, C₁-C₁₂ imino-containing alkyl radical, C₆-C₂₀ imino-containing aryl radical, C₆-C₂₀ aralkyl radical, C₆-C₂₀ alkaryl radical, and combinations thereof;
D is embraced by the structure: 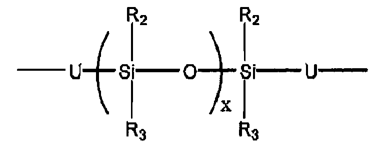 where: x ranges from 1 to 2000;
U is a divalent moiety selected from C₁-C₁₂ alkylene radical, C₁-C₁₂ iminoalkyl or polyiminoalkyl radical, C₆-C₂₀ cycloalkylene radical, C₆-C₂₀ iminocycloalkyl radical, C₆-C₂₀ arylene or aryleneamino radical, C₆-C₂₀ aralkylene radical, C₆-C₂₀ alkarylene or iminoaryl radical, and combinations thereof; and
R₂ and R₃ are respectively selected from C₁-C₁₂ alkyl radical, C₆-C₂₀ cycloalkyl radical, C₆-C₂₀ aryl radical, C₆-C₂₀ aralkyl radical, C₆-C₁₆ alkaryl radical and combinations thereof;
X is selected from H, OCN-Q-NRCO-, HNR₁-D-NR₁-Q'-, and E-Q'-, where R, D, R₁, Q and Q' are defined as above;
Z is selected from -Y-X, -NR₁-D-NR₁-X, and E, where Y, X, R₁ and D are defined as above;
   where the above E is a residue of monoamine monomer or a residue of monoimino silane end-capping agent, with the residue of monoamine monomer having a general formula: -N(Rₑ)R_{fl}, and the residue of monoimino silane end-capping agent having a general formula: -N(Rₑ)-R_{g}-Si(Rₐ)_{y}(OR_{b})_{3-y}, where Rₑ, Rₐ, R_{b} and y are defined as above; R_{f} is selected from C₁-C₁₂ alkyl radical, C₆-C₂₀ cycloalkyl radical, C₆-C₂₀ aryl radical, C₆-C₂₀ aralkyl radical, C₆-C₂₀ alkaryl radical, and combinations thereof; R_{g} is a divalent moiety selected from C₁-C₁₂ alkylene radical, C₆-C₂₀ cycloalkylene radical, C₆-C₂₀ arylene radical, C₆-C₂₀ aralkylene radical, C₆-C₂₀ alkarylene radical, and combinations thereof,
which method comprises the steps of:
(1) reacting a polyisocyanate component A having two or more isocyanate functional groups with a polysiloxane component B having two amino or imino groups, to obtain an isocyanato-capped prepolymer; and
(2) further reacting after adding a silane component C having two or more amino, Imino, hydrazino, and/or alkylhydrazino and from 0 to 3 alkoxy groups, to obtain the organosilicon-polyurea base polymer.

Q in the above formula is preferably selected from tolylene radical, 4,4'-diphenylenemethyl radical, 3,3'-dlmethyl-4,4'-biphenylene radical, tetramethyl-m-dimethylenephenyl radical, phenylene radical, naphthylene radical, 4,4'-dicyclohexylenemethyl radical, 1,6-hexylene radical, 1,4-cyclohexylene radical, methylcyclohexylene radical and 3,5,5-trimethyl-3-methylenecyclohexyl radical.

The base polymer described herein has a weight average molecular weight of preferably from 3 x 10² to 2 x 10⁵, more preferably from 2 x 10³ to 1.5 x 10⁵, and a molecular weight distribution index of preferably from 1 to 3. The molecular weight and molecular weight distribution described herein are determined by gel permeation chromatography, with polystyrene as the test standard.

In an embodiment of the present invention, the reactive components further comprise an end-capping agent selected from monoamino silanes and monoamines, and/or an auxiliary chain extender selected from diamines or polyamino compounds, which may be added at any step (either step (1) or step (2)) of polymerizing the base polymer. When a monoamine end-capping agent monomer is added, X in formula of the base polymer is chosen as E-Q', and Z in formula of the base polymer is chosen as E.

The suitable polyisocyanate component A used herein includes polyisocyanates having two or more isocyanate groups, preferably polyisocyanates having an average functionality of 2 to 4, most preferably polyisocyanates having an average functionality of 2. The amount of the polyisocyanates, based on the total weight of reactive components for preparing the base polymer, is 0.1 to 60% by weight, preferably 2 to 50% by weight, more preferably 5 to 35% by weight. The polyisocyanates include aliphatic, alicyclic, aliphatic-aromatic or aromatic polyisocyanates. The polyisocyanates are preferably selected from the following monomers, oligomers thereof, derivatives thereof and mixtures thereof, said monomers include, but are not limited to: diphenylmethane diisocyanate, isophorone diisocyanate (IPDI). hexamethylene diisocyanate, dicyclohexylmethane diisocyanate, naphthalene diisocyanate, p-phenylene diisocyanate, cyclohexylene diisocyanate, xylylene diisocyanate, tetramethyl-m-xylylene diisocyanate, 2,5(2,6)-di(isocyanatomethyl)-bicyclo[2,2,1]heptane, norbornane diisocyanate, 4,4'-methylene-bis-phenyl-diisocyanate (MDI), tolylene diisocyanate (TDI), 1,6-hexamethylene diisocyanate (HDI), tetramethyl-phenyldimethylene diisocyanate (TMXDI), triphenylmethane diisocyanate, methylcyclohexyl diisocyanate, trilsocyanates, and tetralsocyanates, and polymethylenepolyphenyl polyisocyanates. The preferred one is MDI, TDI, HDI, IPDI or mixtures thereof in any ratio.

The polysiloxane component B used herein includes polysiloxanes having two amino or imino groups embraced by the structure: 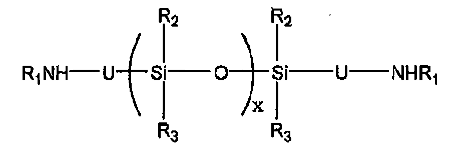 where x and U are defined as above;
R₁ is selected hydrogen, C₁-C₁₂ alkyl radical, C₆-C₂₀ cycloalkyl radical, C₆-C₂₀ aryl radical, C₆-C₂₀ aralkyl radical, C₆-C₂₀ alkaryl radical and combinations thereof; and
R₂ and R₃ are respectively selected from C₁-C₁₂ alkyl radical, C₆-C₂₀ cycloalkyl radical, C₆-C₂₀ aryl radical, C₆-C₂₀ aralkyl radical, C₆-C₂₀ alkaryl radical, and combinations thereof.

The polysiloxane component B used herein has a weight average molecular weight of preferably from 1.92 x 10² to 1.0 x 10⁵, and a molecular weight distribution index of preferably from 1 to 3. The amount of the polysiloxane component B, based on the total weight of reactive components for preparing the base polymer, is 30 to 99.9% by weight.

Aminohydrocarbyl polysiloxane is preferred as component B herein, and is selected from aminopropyl dimethyl terminated polydimethylsiloxane, cyclohexylaminopropyl dimethyl terminated polymethylphenylsiloxane, aminomethyl dimethyl terminated polydimethylsiloxane, aminopropyl dimethoxyl terminated polydimethylsiloxane, aminomethyl diethoxy terminated polydimethylsiloxane, aminomethyl vinylmethoxy terminated polydimethylsiloxane, ethyl aminopropyl methylethoxy terminated polydimethylsiloxane, phenylaminopropyl diethoxy terminated polymethylpropylsiloxane, N-phenylaminopropyl dimethoxy terminated polymethylphenylsiloxane, N-methyl-aminopropyl dimethyl terminated polydimethylsiloxane, and aminopropyl dimethyl terminated polymethylphenylsiloxane, and combinations thereof.

The silane component C used herein includes silanes having two or more, preferably 2-4, amino, imino, hydrazino, and/or alkylhydrazino and from 0 to 3 alkoxy groups. The silane component C is preferably a monomer embraced by the structure of the following formula, or mixture thereof:

**HN(Rₑ)R_{d}NH-R_{c}Si(Rₐ)_{y}(OR_{b})_{3-y}**

where Rₐ, R_{b}, Rₒ, R_{d}, Rₑ and y are defined as above.

The silane component C is preferably selected from aminoethyl aminopropyl trimethoxy silane, aminoethyl aminopropyl triethoxy silane, aminoethyl aminopropylmethyl dimethoxy silane, aminoethyl aminopropylmethyl diethoxy silane, aminoethyl aminomethyl triethoxy silane, aminoethyl aminomethyl methyl diethoxy silane, hexamethylenediamino methyl trimethoxy silane, γ-divinyltriaminopropyl triethoxy silane, γ-divinyltriaminopropyl methyl diethoxy silane, γ-divinyltriaminomethyl triethoxy silane, γ-divinyltriaminomethyl methyl diethoxy silane, hydrazinopropyl triethoxy silane, hydrazinopropyl methyl diethoxy silane, hydrazinomethyl triethoxy silane, hydrazinomethyl trimethoxy silane, hydrazinomethyl methyl dimethoxy silane, hydrazinomethyl methyl diethoxy silane, and mixtures thereof in any ratio. In the present invention, component C serves as a chain extender for prepolymer obtained from reacting components A and B, and results in a base polymer having a relatively higher molecular weight. A crosslinked network structure of intra- and inter-molecules is formed in the base polymer through inter-crosslinking of pendant siloxane groups on side chains of its molecular chains, thereby obtaining the elastomer of interest in the present invention.

The amount of the component C, based on the total weight of reactive components for preparing the base polymer, is 0.01 to 60% by weight, preferably 0.1 to 35% by weight, more preferably 0.2 to 30% by weight.

Preferably, the amount ratio of the components A, B and C satisfies the following condition: the molar ratio of isocyanato radical to all radicals reactive with polyisocyanate, including amino, imino, hydrazino, and alkylhydrazino, is 0.5-3:1, more preferably 0.6-2:1, most preferably 0.8-1.2:1.

The auxiliary chain extender used herein preferably has a general formula: NH(Rₑ)R_{d}NH(Rₑ), where R_{d} and Rₑ are defined as above, and the two Rₑ are either the same or different. Its amount, based on the total weight of reactive components for preparing the base polymer, is from 0.01 to 10% by weight, preferably from 0.1 to 3% by weight. By virtue of adding the auxiliary chain extender into the base polymer, the properties of the base polymer and the elastomer prepared therefrom can be further improved.

The present end-capping agent selected from monoamino silanes and monoamines is used in an amount, based on the total weight of reactive components for preparing the base polymer, of from 0.01 to 30% by weight. The monoamine monomer has a general formula: HN(Rₐ)R_{f}, and the monoimino silane end-capping agent has a general formula: HN(Rₑ)-R_{g}-Si(Rₐ)_{y}(OR_{b})_{3-y}, where Rₑ, Rₐ, R_{b}, R_{f} , R_{g} and y are defined as above. When the end-capping agent is a monoamino silane, it is used in an amount, based on silane component C, of from 1 to 50% by weight.

Preferably, the prepolymer obtained by reacting components A and B has a weight average molecular weight of from 2.9 x 10² to 2.0 x 10⁵ and a molecular weight distribution index of 1 to 3.

An alternative method for preparing said self-crosslinking organosilicon-polyurea base polymer comprises the steps of:
(1) reacting a polyisocyanate component A having two or more isocyanate functional groups with a silane component C having two or more amino, Imino, hydrazino, and/or alkylhydrazino and from 0 to 3 alkoxy groups, to obtain an isocyanato amino silane coupling agent; and
(2) further reacting after adding a polysiloxane component B having two amino or imino groups, to obtain an organosilicon-polyurea base polymer.

A further alternative method for preparing said self-crosslinking organosilicon-polyurea base polymer comprises the steps of:
(1) forming a mixture of a silane component C having two or more amino, imino, hydrazino, and/or alkylhydrazino and from 0 to 3 alkoxy groups, with a polysiloxane component B having two amino or imino groups; and
(2) adding a polyisocyanate component A having two or more isocyanate functional groups to the above mixture, and then allowing the components A, B and C to react simultaneously, thereby obtaining an organosilicon-polyurea base polymer.

With respect to the present preparation methods, the preferred embodiments include: (I) multiple-step reaction comprising reacting components A and B to obtain a prepolymer, and further reacting after adding component C; and (II) one-step reaction including pre-mixing components B and C, and then reacting together after adding component A.

In the present preparation methods of the base polymer, the entire polymerization reactions may be carried out in air or under the protection of an inert gas, said inert gas including nitrogen, argon and helium, preferably nitrogen or argon. Preferably, the typical reaction steps (1) and (2) in the above embodiments are under the protection of an inert gas.

In the present preparation methods of the base polymer, each step of the polymerization reactions may be carried out in the presence of a solvent; and the polymerization may be solution polymerization.

In the present preparation methods of the base polymer, each step of the polymerization reactions among components A, B and C may also be bulk polymerizations in the absence of a solvent.

In the solution polymerization, suitable organic solvents include, but are not limited to: tetrahydrofuran (THF), toluene, dimethyl formamide (DMF), dimethyl acetamide (DMAc), methyl pyrrolidone, xylene or mixtures thereof, preferably THF, DMF and DMAc, most preferably a mixed solvent of THF-toluene in a volume ratio of 1:1 Preferably, a solvent used in the solution reaction is selected from tetrahydrofuran, toluene, dimethyl formamide, dimethyl acetamide, or a mixed solvent thereof, wherein optionally the mixed solvent by volume ratio is tetrahydrofurane:toluene = 3-0.1:1, or tetrahydrofuran:dimethyl formamide = 4-0.2:1. or tetrahydrofuran:dimethyl acetamide = 4-0.3:1. In the solution polymerization, the reactive components for forming the base polymer and the solution are in a weight ratio (i.e., solid content of the solution) of 1 to 80% by weight, preferably 5 to 70% by weight, most preferably 10 to 50% by weight.

In the present preparation method of the self-crosslinking organosilicon-polyurea base polymer, each step of the polymerization reactions may be carried out at room temperature or lower temperature, or under heating condition to speed up the reaction course. In the solution polymerization, the reaction temperature is preferably from 0 to 150°C and must be kept at below boiling point of the solvent used, more preferably 10 to 80°C, even more preferably 30 to 70°C. In the bulk polymerization, the reaction temperature is preferably 0 to 250°C, more preferably 25 to 190°C, even more preferably 80 to 160°C.

In the solution polymerization, the reactants may be added in batch or in droplet. The reaction is generally finished within 1 to 24 hr in total, wherein step (1) is generally finished within 0. 5 to 10 hr; and step (2) is generally finished within 0. 5 to 14 hr, if necessary, the concrete reaction time may be determined via detecting the desired small molecule (the component A and the component C of the present invention) content and extent of reaction by gas chromatography, and then solvent and low-boiler are removed by natural volatilization at room temperature drying condition, or the low-boiler is extracted under dry and vacuum condition at 60°C for 5-6 hr, thereby obtaining a dry base prepolymer.

In the bulk polymerization, the reaction time is generally 0.02-10 hr in total, wherein step (1) is generally finished within 0. 01 to 4 hr; and step (2) is generally finished within 0. 01 to 6 hr, if necessary, the concrete reaction time may be determined via detecting the desired small molecular (the component A and the component C of the present invention) content and extent of reaction by gas chromatography, thereby obtaining a dry base prepolymer.

In the present preparation method of the self-crosslinking organosilicon-polyurea base polymer, each step of polymerization reactions may be carried out at normal pressure or lower, or under pressurized protection of an inert gas. In solution polymerization, the reaction pressure is preferably 0.1 to 5 atm (absolute pressure, the same below), more preferably 0.5 to 3 atm, even more preferably 0.9 to 2 atm. In bulk polymerization, the reaction pressure is 0.01 to 10 atm, preferably 0.1 to 5 atm, more preferably 0.9 to 3 atm.

Each step of bulk polymerization reactions may be carried out in a mixing extruder or extruding gun. The mixing extruder used herein includes single-screw, twin-screw or multi-screw extruder as commonly used for processing macromolecules, and high-speed mixer (e.g., planet-type mixer (Hauschild Speed Mixer), manufactured by Flack Tek Co. (Landrum, South Carolina 29356, U.S.A.)). The suitable extruding gun used herein includes those commonly used in the field of sealants, such as extruding guns (e.g., Loctite® Dual Cartridge Manual Applicators, Models 983438 and 985246; Loctite® Universal Metal Dispenser, Model 985245; or High precision Loctite® Meter Mix Dispense Systems), manufactured by Henkel Corporation (Rocky Hill, Connecticut 06067, U.S.A.).

The present organosilicon-polyurea base polymer can self-crosslink and cure in humid environment at room temperature, or under heating condition (a heating temperature 25 - 250°C). Since siloxane functional groups inside the organosilicon-polyurea elastomer can react and then crosslink in the presence of steam in air, a suitable amount of water may also be added during the course of preparing the elastomer for promoting crosslinking, and increasing crosslinking speed and crosslinking extent. The amount of the added water is 0.01-1% by weight of the base polymer.

The crosslinking reaction of the present self-crosslinking organosilicon-polyurea base polymer can also be carried out in the presence of a catalyst for accelerating the crosslinking reaction. The catalyst is selected from those commonly used for preparation of polyurethane and polyurea, for instance, conventional catalysts used in hydrolysis-condensation reaction of organic alkoxy silyl radicals or in condensation reaction of organic silanol, including various acids, bases, salts, metal oxides and mixtures thereof. The acid catalyst is selected from, but not is limited to, sulfuric acid, hydrochloric acid, acetic acid, oxalic acid, trichloroacetic acid, methylbenzenesulfonic acid and mixtures thereof. The base catalyst is selected from, but is not limited to, triethylamine, triethylenediamine, tertiary amines, silylated amines and mixtures thereof. The salt catalyst is selected from stannous caprylate, dibutyl dilaurate, alkyl tin, alkyl aluminum, alkoxides, siloxides, and mixtures thereof. The metal oxide catalyst is selected from, but is not limited to, vanadic oxide, tetraisopropyl zirconium oxide and mixtures thereof. Preferred catalysts are organic tin such as stannous caprylate and dibutyl dilaurate; and tertiary amine such as triethylamine and triethylenediamine, and mixtures thereof. The catalyst is more preferably stannous caprylate, dibutyl dilaurate, triethylenediamine, and mixtures thereof. The catalyst can also be added when preparing the base polymer.

During the course of crosslinking the present self-crosslinking organosilicon-polyurea base polymer, a silane crosslinking agent having two or more, preferably 2 to 4, alkoxy groups may be added for further enhancing the crosslinking property, which includes, but is not limited to, one or more selected from ethyl orthosilicate, methyltrimethoxy silane, aminoethyl aminopropyl methyl diethoxy silane, and N-anilinomethyl trimethoxy silane. The amount of the silane crosslinking agent is, based on the total weight of the base polymer, from 0.01 to 30% by weight, preferably from 0.1 to 20% by weight. The silane crosslinking agent can also be added when preparing the base polymer.

To the elastomer obtained by crosslinking the present self-crosslinking organosilicon-polyurea base polymer, a filler, such as one or more selected from silica, titania, iron oxide, calcium carbonate and carbon black, may be added for further enhancing the property of the elastomer. The amount of the filler is, based on the total weight of the elastomer, from 0.1 to 60% by weight, preferably 1 to 40% by weight.

The present invention is characterized by introducing the above silane component C, which not only serves as a chain extender to increase molecular weight of the base polymer, but also endows, owing to its crosslinking groups, the base polymer with the specialty of being curable at room temperature. Moreover, by adjusting the ratio of component C, the molecular weight and degree of crosslinking of the final elastomeric polymer material can be directly controlled, so that the preparation and property adjustment of the polymer material become simple and direct.

The present preparation method of the self-crosslinking organosilicon-polyurea base polymer is not restricted by the charging order of components, and the three components may even react simultaneously. The preparation method is simple and easily-operated.

The present preparation method of the self-crosslinking organosilicon-polyurea base polymer may include direct bulk polymerization reactions in the absence of a solvent, thereby eliminating the necessity of utilizing and recovering solvent, which is in favor of environmental protection.

By changing the ratios of component C, said end-capping agent and said auxiliary chain extender, the elastomer obtained by crosslinking the present self-crosslinking organosilicon-polyurea base polymer may have an elongation varying in the range of 10 to 1500%. The crosslinked material has excellent high- and low-temperature resistance, which keeps good elasticity generally at a temperature range from -40 to 250°C, and has a thermal decomposition temperature up to 200°C. The crossllinked elastomer is hardly dissolved in routine organic solvents, and the swelling ratio thereof varies from 50 to 300%, depending on different crosslinking density.

The present elastomeric material can be widely used as sealants, adhesives, gaskets, buffer layers and coatings, in particular as sealants in automobile industry, for instance, as sealants of oil pipes and hoods in automobile assembly.

The present self-crosslinking organosilicon-polyurea base polymer can be in the form of a solution sol in their routine solvents. The solution sol can then be applied, once or more times, to a substrate to be sealed by means of seal-coating, casting or kiss-coating. The dry film obtained has a thickness of from 0.01 to 10 mm. The suitable substrate includes such as metal, plastic, rubber, wood and glass.

Unless identified otherwise, the percentages and ratios used herein are all on the basis of weight ; and the amounts of various components are all on the basis of the total weight of reactive components for preparing the base polymer.

All the publications mentioned are incorporated herein for reference in their entirety for all purposes.

### Examples

The following examples further demonstrate the preferred embodiments of the present inventions. All the examples are merely illustrative, not interpreted as limiting to the present inventions.

Unless identified otherwise, each steps involved in the following examples are all conducted under atmospheric pressure, ambient temperature, and the relative humidity of 50%.

Unless identified otherwise, in the following examples, polysiloxanes used are purchased from Gelest Co., 11 East Steel Rd. , Morrisville, PA 19067, U.S.A., polyisocyanates used are purchased from Aldrich Chemical Co., P. O. Box 2060 , Milwaukee, WI 53201, U.S.A., and all the remaining reagents like organic solvents and catalysts used herein are purchased from Shanghai Chemicals Co., Shanghai, China.

The methods for determining relevant data in examples of the present invention are as follows.

The thermogravimetric analysis of sample is determined by using a TGA-6 device, manufactured by PerkinElmer Co., (45 William Street, Wellesley, MA 02481-4078, USA) U.S.A., with a temperature range of from room temperature to 1000°C, a sensitivity of 0.1 µg, and a heating rate of 0.1-200°C/min.

The stress-strain property of sample is determined by using WO-I model electronic universal test machine (Instron Corporation , 825 University Avenue, Norwood, MA 02062-2643, USA), according to US standard ASTM-D412.

The swelling ratio of sample is determined by the steps as follows: about 1 g of sample dry film as exactly weighted is placed in a closed vessel, and dipped in a toluene solvent at 20°C for 24 hr, and then immediately weighted after taking it out. The increased mass of sample is obtained by deducting the mass of Initial dry film from the mass of sample having absorbed toluene, and then the swelling ratio of sample is obtained from dividing the mass of initial sample by the increased mass.

The molecular weight and its distribution of the organosilicon-polyurea base polymer are determined by GPC-244 model gel permeation chromatograph with a separator column PLGEL10 MIX-B (Waters Corporation, 34 Maple Street, Milford, Massachusetts, 01757 USA), and with THF as mobile phase.

Unless identified otherwise, all the determinations are performed under atmospheric pressure, ambient temperature, and the relative humidity of 50%.

### Example 1

In a vessel with agitator, 200 g aminopropyl dimethyl terminated polydimethylsiloxane (M_{w} = 1000; 0.4 moles amino groups, Gelest Co.) was dissolved with 1 L solvent (toluene:THF = 1:1, volume ratio), to which 66.6 g IPDI (0.6 moles NCO) was added before allowing the system to react at 40°C for 2 hr. After adding 26.4 g aminoethyl aminopropyl triethoxy silane (0.2 moles amino groups, TM-552, Wuhan Tianmu Science and Technology Co., 96# South Road of Zhuodaoquan, Hongshan District, Wuhan City, China,), the system continuously reacted at 40°C for 4 hr. The reaction was carried out under N₂ protection at 1.01 atm. A solution sol of organosilicon-polyurea base polymer having a molar ratio of components A:B:C = 3:2:1 was finally prepared. The solution sol was poured to form a film, which was cured and crosslinked at room temperature to obtain an elastomertic material. The base polymer, prior to crosslinking, had a weight average molecular weight of 1 x 10⁵. The elastomeric material had an elongation at break of 200%, and a Young modulus of 44.3 Mpa, which began to thermally decompose at 220°C, kept elastic at a temperature range of -40 to 200°C, and had a swelling ratio of 250% in toluene.

### Example 2 (comparative example)

In a dual-cartridge extruding gun (Loctite® Dual Cartridge Manual Applicators, model 983438, with a volume ratio of A:B = 10:1, manufactured by Henkel Co.), 300.0 g aminopropyl dimethyl terminated polymethylphenylsiloxane (M_{w} = 3000; 0.2 mol amino groups, made by referring to James E. McGrath, Debra L. Dunson, Sue J. Mechaml, James L. Hedrick, Advances in Polymer Science, Vol. 140, 1999, 62-99) was added to A; and 33.6 g cyclohexylene diisocyanate (0.4 moles NCO, ) and 19.6 g aminoethyl aminopropyl methyldimethoxy silane (TM-602, 0.2 mol amino groups, Wuhan Tianmu Science and Technology Co.) as well as 0.005 g stannous caprylate (Shanghai Qidi Chemical Industry Co., Ltd., 2299# North Road of Zhongshan, Shanghai City, China) were added to B. The forehead mixer of the extruding gun is φ 8 mm static mix nozzles Part No. 983443. By virtue of extrusion at room temperature, an elastomeric material from organosilicon-polyurea base polymer having a molar ratio of components A:B:C = 2:1:1 was obtained over 15 seconds. The elastomeric material had an elongation at break of 320%, and a Young modulus of 14.8 Mpa, which began to thermally decompose at 250°C, kept elastic at a temperature range of -50 to 250°C, and had a swelling ratio of 107% in toluene.

### Example 3

In a vessel with agitator, 475 g aminopropyl dimethyl terminated polydimethylsiloxane (M_{w} = 5000; 0.19 moles amino groups, made by referring to the same document as given in Example 2) was dissolved with 1 L solvent (DMF:THF = 1:2, volume ratio), to which 25 g MDI (0.20 moles NCO) was added before allowing the system to react at 50°C for 1 hr. After adding 1.11 g aminoethyl aminopropyl methyldimethoxy silane (0.01 moles amino groups, primary amino groups plus secondary amino groups, TM551, Wuhan Tianmu Science and Technology Co.), the system continuously reacted at 50°C for 4 hr. The reaction was carried out under N₂ protection at 1.05 atm. A solution sol of organosilicon-polyurea base polymer having a molar ratio of components A:B:C = 20:19:1 was finally prepared. The solution sol was poured to form a film, which was cured and crosslinked at room temperature to obtain an elastomertic material. The base polymer, prior to crosslinking, had a weight average molecular weight of 8 x 10⁴. The elastomeric material had an elongation at break of 500%, and a Young modulus of 4.1 Mpa, which began to thermally decompose at 200°C, kept elastic at a temperature range of -50 to 200°C, and had a swelling ratio of 90% in toluene.

### Example 4 (comparative example)

In a vessel with agitator, 500 g N-methyl-aminopropyl dimethyl terminated polydimethylsiloxane (M_{w} = 1000; 1 moles amino groups, made by referring to the same document as given in Example 2) was dissolved with 1 L solvent (toluene:THF = 1:1, volume ratio), to which 258 g cyclohexylene diisocyanate (3.11 mol NCO) together with 166 g hydrazinomethyl trimethoxy silane (2 moles amino groups, primary amino groups plus secondary amino groups, made by referring to *Study on Novel* α*-silane Coupling Agent, Shi Baochuan, Article Collection of 12^{th} China Silicone conference, 289-295, Nanjing Normal Universiy, Nanjing 210097, China*) were added before allowing the system to react at 50°C for 5 hr. The reaction was carried out under argon protection at 1.0 atm. A solution sol of organosilicon-polyurea base polymer having a molar ratio of components A:B:C = 31:10:20 was finally prepared. The solution sol was poured to form a film, which was cured and crosslinked at room temperature to obtain an elastomertic material. The elastomeric material had an elongation at break of 100%, and a Young modulus of 9.2 Mpa.

## Claims

1. A method for preparing an organosilicon-polyurea base polymer capable of self-crosslinking under humid condition, which is **characterized by** the following formula: 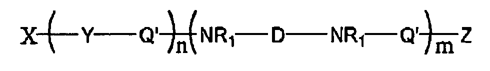 where:
m, n are respectively an integer from 1 to 750;
Q' = CO-NR-Q-NR-CO, where: Q is a divalent moiety selected from C₆-C₂₀ arylene radical, C₆-C₂₀ aralkylene radical, C₁-C₂₀ alkylene radical, C₆-C₂₀ cycloalkylene, and combinations thereof; and R is hydrogen or C₁-C₁₂ alkyl radical;
R₁ is selected from hydrogen, C₁-C₁₂ alkyl radical, C₆-C₂₀ cycloalkyl radical, C₆-C₂₀ aryl radical, C₆-C₂₀ aralkyl radical, C₆-C₂₀ alkaryl radical and combinations thereof;
Y is embraced by the structure: 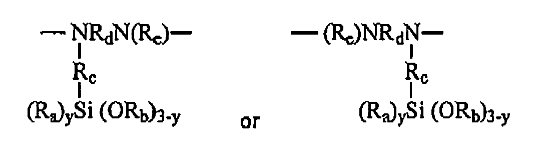 where: Rₐ and R_{b} are respectively selected from C₁-C₁₆ alkyl radical, C₆-C₂₀ aryl radical, C₆-C₂₀ aralkyl radical, C₆-C₂₀ alkaryl radical, and combinations thereof; y = 0 to 3; R_{c} is a divalent moiety selected from C₁-C₁₂ alkylene radical, C₁-C₁₂ imino-containing alkylene radical, C₆-C₂₀ imino-containing arylene radical, C₆-C₂₀ aralkylene radical, C₆-C₂₀ alkarylene radical, and combinations thereof;
R_{d} is a direct bond, or a divalent moiety selected from C₁-C₁₂ alkylene radical, C₁-C₁₂ imino-containing alkylene radical, C₆-C₂₀ imino-containing arylene radical, C₆-C₂₀ aralkylene radical, C₆-C₂₀ alkarylene radical, and combinations thereof; and
Rₑ is selected from hydrogen, C₁-C₁₂ alkyl radical, C₁-C₁₂ imino-containing alkyl radical, C₆-C₂₀ imino-containing aryl radical, C₆-C₂₀ aralkyl radical, C₆-C₂₀ alkaryl radical, and combinations thereof;
D is embraced by the structure: 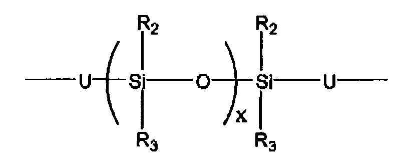
wherein: x ranges from 1 to 2000;
U is a divalent moiety selected from C₁-C₁₂ alkylene radical, C₁-C₁₂ iminoalkyl or polyiminoalkyl radical, C₆-C₂₀ cycloalkylene radical, C₆-C₂₀ iminocycloalkyl radical, C₆-C₂₀ arylene or aryleneamino radical, C₆-C₂₀ aralkylene radical, C₆-C₂₀ alkarylene or iminoaryl radical, and combinations thereof; and
R₂ and R₃ are respectively selected from C₁-C₁₂ alkyl radical, C₆-C₂₀ cycloalkyl radical, C₆-C₂₀ aryl radical, C₆-C₂₀ aralkyl radical, C₆-C₁₆ alkaryl radical and combinations thereof;
X is selected from H, OCN-Q-NRCO-, HNR₁-D-NR₁-Q'-, and E-Q'-, where R, D, R₁, Q and Q' are defined as above;
Z is selected from -Y-X, -NR₁-D-NR₁-X, and E, where Y, X, R₁ and D are defined as above;
where the above E is a residue of monoamine monomer or a residue of monoimino silane end-capping agent, with the residue of monoamine monomer having a general formula: - N(Rₑ)R_{f}, and the residue of monoimino silane end-capping agent having a general formula: -N(Rₑ)-R_{g}-Si(Rₐ)_{y}(OR_{b})_{3-y}, where Rₑ, Rₐ, R_{b} and y are defined as above; R_{f} is selected from C₁-C₁₂ alkyl radical, C₆-C₂₀ cycloalkyl radical, C₆-C₂₀ aryl radical, C₆-C₂₀ aralkyl radical, C₆-C₂₀ alkaryl radical, and combinations thereof; R_{g} is a divalent moiety selected from C₁-C₁₂ alkylene radical, C₆-C₂₀ cycloalkylene radical, C₆-C₂₀ arylene radical, C₆-C₂₀ aralkylene radical, C₆-C₂₀ alkarylene radical, and combinations thereof,
which method comprises the steps of:
(1) reacting a polyisocyanate component A having two or more isocyanate functional groups with a polysiloxane component B having two amino or imino groups, to obtain an isocyanato-capped prepolymer; and
(2) further reacting after adding a silane component C having two or more amino, imino, hydrazino, and/or alkylhydrazino and from 0 to 3 alkoxy groups, to obtain the organosilicon-polyurea base polymer.

2. The method as claimed in claim 1, wherein the prepolymer obtained by reacting components A and B has a weight average molecular weight of from 2.9 x 10² to 2.0 x 10⁵, and a molecular weight distribution index of 1 to 3.

3. The method as claimed in claim 1, wherein said polyisocyanate component A has two to four isocyanate functional groups; and/or said silane component C has two to four amino, imino, hydrazino, and/or alkylhydrazino and from 0 to 3 alkoxy groups.

4. The method as claimed in any one of claims 1-3, wherein the reaction is carried out in solution or wherein the reaction is solvent-free bulk reaction.

5. The method as claimed in any one of claims 1-3, wherein the polyisocyanate component A is selected from the following monomers, oligomers thereof, derivatives thereof, and mixtures thereof, said monomers is selected from: diphenylmethane diisocyanate, isophorone diisocyanate, hexamethylene diisocyanate, dicyclohexylmethane diisocyanate, naphthalene diisocyanate, p-phenylene diisocyanate, cyclohexylene diisocyanate, xylylene diisocyanate, tetramethyl-m-xylylene diisocyanate, 2,5(2,6)-di(isocyanatomethyl)-bicyclo[2,2,1]heptane, norbornane diisocyanate, 4,4'-methylene-bis-phenyl-diisocyanate, tolylene diisocyanate, 1,6-hexamethylene diisocyanate, tetramethyl-phenyldimethylene diisocyanate, triphenylmethane diisocyanate, methylcyclohexyl diisocyanate, triisocyanates, and tetraisocyanates, and polymethylenepolyphenyl polyisocyanates.

6. The method as claimed in any one of claims 1-3, wherein the polysiloxane component B has the following formula: 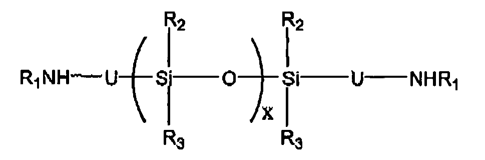 where: x and U are defined as in claim 1;
R₁ is selected from hydrogen, C₁-C₁₂ alkyl radical, C₆-C₂₀ cycloalkyl radical, C₆-C₂₀ aryl radical, C₆-C₂₀ aralkyl radical, C₆-C₂₀ alkaryl radical and combinations thereof;
R₂ and R₃ are respectively selected from C₁-C₁₂ alkyl radical, C₆-C₂₀ cycloalkyl radical, C₆-C₂₀ aryl radical, C₆-C₂₀ aralkyl radical, C₆-C₂₀ alkaryl radical, and combinations thereof.

7. The method as claimed in any one of claims 1-3, wherein the polysiloxane component B has a weight average molecular weight of from 1.92 x 10² to 1.0 x 10⁵, and a molecular weight distribution index of 1 to 3.

8. The method as claimed in claim 6, wherein the polysiloxane component B is selected from aminopropyl dimethyl terminated polydimethylsiloxane, cyclohexylaminopropyl dimethyl terminated polymethylphenylsiloxane, aminomethyl dimethyl terminated polydimethylsiloxane, aminopropyl dimethoxyl terminated polydimethylsiloxane, aminomethyl diethoxy terminated polydimethylsiloxane, aminomethyl vinylmethoxy terminated polydimethylsiloxane, ethyl aminopropyl methylethoxy terminated polydimethylsiloxane, phenylaminopropyl diethoxy terminated polymethylpropylsiloxane, N-phenylaminopropyl dimethoxy terminated polymethylphenylsiloxane, N-methyl-aminopropyl dimethyl terminated polydimethylsiloxane, and aminopropyl dimethyl terminated polymethylphenylsiloxane, and combinations thereof.

9. The method as claimed in any one of claims 1-3, wherein the silane component C is a monomer embraced by the structure of the following formula or mixture thereof:
**HN(Rₑ)R_{d}NH-R_{c}-Si(Rₐ)_{y}(OR_{b})_{3-y}**
where, Rₐ, R_{b}, R_{c}, R_{d}, Rₑ and y are defined as in claim 1.

10. The method as claimed in claim 9, wherein the silane component C is selected from aminoethyl aminopropyl trimethoxy silane, aminoethyl aminopropyl triethoxy silane, aminoethyl aminopropylmethyl dimethoxy silane, aminoethyl aminopropylmethyl diethoxy silane, aminoethyl aminomethyl triethoxy silane; aminoethyl aminomethyl methyl diethoxy silane, hexamethylenediamino methyl trimethoxy silane, γ-divinyltriaminopropyl triethoxy silane, γ-divinyltriaminopropyl methyl diethoxy silane, γ-divinyltriaminomethyl triethoxy silane, γ-divinyltriaminomethyl methyl diethoxy silane, hydrazinopropyl triethoxy silane, hydrazinopropyl methyl diethoxy silane, hydrazinomethyl triethoxy silane, hydrazinomethyl trimethoxy silane, hydrazinomethyl methyl dimethoxy silane, hydrazinomethyl methyl diethoxy silane, and mixtures thereof.

11. The method as claimed in any one of claims 1-3, wherein an auxiliary chain extender is added in the step (1) or (2), which has a general formula: NH(Rₐ)R_{d}NH(Rₑ), where R_{d} and Rₑ are defined as in claim 1, and the two Rₑ is either the same or different, wherein optionally the amount of the auxiliary chain extender, based on the total weight of reactive components for preparing the base polymer, is from 0.01 to 10% by weight.

12. The method as claimed in any one of claims 1-3, wherein the amount of component A, based on the total weight of reactive components for preparing the base polymer, is from 0.1 to 60% by weight, and/or wherein the amount of component B, based on the total weight of reactive components for preparing the base polymer, is 30 to 99.9% by weight and/or wherein the amount of component C, based on the total weight of reactive components for preparing the base polymer, is from 0.01 to 60% by weight.

13. The method as claimed in any one of claims 1-3, wherein the amount ratio of components A, B and C satisfies the following condition: the molar ratio of isocyanato radical to the sum of all amino, imino, hydrazino, and alkylhydrazino radicals which are reactive with polyisocyanate is 0.5-3:1.

14. The method as claimed in any one of claims 1-3, wherein an end-capping agent is added in the step (1) or (2), which amount, based on the total weight of reactive components for preparing the base polymer, is from 0.01 to 30% by weight, wherein optionally the end-capping agent is a monoamino silane, which is used in an amount, based on silane component C, of from 1 to 50% by weight.

15. The method as claimed in claim 4, which is **characterized in that** a solvent used in the solution reaction is selected from tetrahydrofuran, toluene, dimethyl formamide, dimethyl acetamide, or a mixed solvent thereof, wherein optionally the mixed solvent by volume ratio is tetrahydrofuran:toluene = 3-0.1:1, or tetrahydrofuran:dimethyl formamide = 4-0.2:1, or tetrahydrofuran:dimethyl acetamide = 4-0.3:1.

16. The method as claimed in claim 4, wherein the bulk reaction is carried out in a mixing extruder or an extruding gun.

17. The method as claimed in claim 4, wherein the reaction temperature, in the solution polymerization, is from 0 to 150°C and must be kept below boiling point of the solution or the reaction temperature, in the bulk polymerization, is 0 to 250°C.

18. The method as claimed in claim 4, wherein the reaction pressure, in the solution polymerization, is from 0.1 to 5 atm or the reaction pressure, in the bulk polymerization, is from 0.01 to 10 atm.

19. The method as claimed claim 4, wherein the reaction time, in the solution polymerization, is from 1 to 24 hours, wherein optionally the reaction time, in the steps (1) and (2), are respectively from 0.5 to 10 hours and 0.5 to 14 hours.

20. The method as claimed in claim 4, wherein the reaction time, in the bulk polymerization, is from 0.02 to 10 hours, wherein optionally the reaction time, in the steps (1) and (2), are respectively from 0.01 to 4 hours and 0.01 to 6 hours.

21. An organosilicon-polyurea elastomer obtained by crosslinking the base polymer prepared by a method as claimed in any one of claims 1 to 20.

22. The elastomer as claimed in claim 21, wherein the crosslinking is carried out under environmental humid condition and/or wherein the crosslinking is promoted by adding water in an amount of 0.01 to 1% by weight of the base polymer.

23. The elastomer as claimed in claim 21, wherein the crosslinking is carried out in the presence of a silane crosslinking agent having two or more alkoxy groups, the amount of said silane crosslinking agent being, based on the total weight of the base polymer, from 0.01 to 30% by weight, wherein optionally the silane crosslinking agent is selected from ethyl orthosilicate, methyltrimethoxy silane, aminoethyl aminopropyl methyl diethoxy silane, N-anilinomethyl trimethoxy silane, and mixtures thereof.

24. The elastomer as claimed in claim 21, wherein the crosslinking is carried out in the presence of a catalytically effective amount of a catalyst, wherein optionally the catalyst is selected from sulfuric acid, hydrochloric acid, acetic acid, oxalic acid, trichloroacetic acid, methylbenzenesulfonic acid, triethylamine, triethylenediamine, tertiary amines, silylated amines, stannous caprylate, dibutyl dilaurate, alkyl tin, alkyl aluminum, alkoxides, siloxides, vanadic oxide, tetraisopropyl zirconium oxide and mixtures thereof.

25. The elastomer as claimed in claim 21, wherein the crosslinking is carried out at room temperature or wherein the crosslinking is carried out under heating condition with the heating temperature being from 25 to 250°C.

26. The elastomer as claimed in claim 21, further comprises a solid filler selected from silica, titania, iron oxide, calcium carbonate, carbon black and mixtures thereof in any ratio, wherein optionally the amount of the filler is, based on the total weight of the elastomer, from 0.1 to 60% by weight.

27. Use of an organosilicon-polyurea base polymer prepared by a method as claimed in any one of claims 1 to 20 in preparing sealants, adhesives, gaskets, buffer layers and coatings.

28. Use of an elastomer as claimed in any one of claims 21 to 26 for sealants, adhesives, gaskets, buffer layers and coatings.

## Patentansprüche

1. Verfahren zur Herstellung eines unter feuchten Bedingungen selbstvernetzbaren Organosilicium-Polyharnstoff-Basispolymers, welches durch die folgende Formel gekennzeichnet ist: 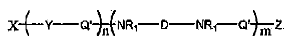 wobei:
m, n jeweils eine ganze Zahl von 1 bis 750 sind;
Q' = CO-NR-Q-NR-CO, wobei: Q ein zweiwertiger Rest ist, der ausgewählt ist aus einem C₆-C₂₀-Arylenrest, C₆-C₂₀-Aralkylenrest, C₁-C₂₀-Alkylenrest, C₆-C₂₀-Cycloalkylen und Kombinationen davon; und R Wasserstoff oder ein C₁-C₁₂-Alkylrest ist;
R₁ ausgewählt ist aus Wasserstoff, einem C₁-C₁₂-Alkylrest, C₆-C₂₀-Cycloalkylrest, C₆-C₂₀-Arylrest, C₆-C₂₀-Aralkylrest, C₆-C₂₀-Alkarylrest und Kombinationen davon;
Y umfasst ist von der Struktur: 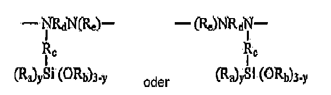 wobei: Rₐ und R_{b} jeweils ausgewählt sind aus einem C₁-C₁₆-Alkylrest, C₆-C₂₀-Arylrest, C₆-C₂₀-Aralkylrest, C₆-C₂₀-Alkorylrest und Kombinationen davon; y = 0 bis 3; R_{c} ein zweiwertiger Rest ist, der ausgewählt ist aus einem C₁-C₁₂-Alkylenrest, iminohaltigen C₁-C₁₂-Alkylenrest, iminohaltigen C₆-C₂₀-Arylenrest, C₆-C₂₀-Aralkylenrest, C₆-C₂₀-Alkarylenrest und Kombinationen davon;
R_{d} eine direkte Bindung oder ein zweiwertiger Rest ist, der ausgewählt ist aus einem C₁-C₁₂-Alkylenrest, iminohaltigen C₁-C₁₂-Alkylenrest, iminohaltigen C₆-C₂₀-Arylenrest, C₆-C₂₀-Aralkylenrest, C₆-C₂₀-Alkarylenrest und Kombinationen davon; und
Rₑ ausgewählt ist aus Wasserstoff, einem C₁-C₁₂-Alkylrest, iminohaltigen C₁-C₁₂-Alkylrest, iminohaltigen C₆-C₂₀-Arylrest, C₆-C₂₀-Aralkylrest, C₆-C₂₀-Alkarylrest und Kombinationen davon;
D umfasst ist von der Struktur: 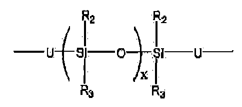 wobei: x von 1 bis 2000 reicht;
U ein zweiwertiger Rest ist, der ausgewählt ist aus einem C₁-C₁₂-Alkylenrest, C₁-C₁₂-Iminoalkyl- oder -Polyiminoalkylrest, C₆-C₂₀-Cycloalkylenrest, C₆-C₂₀-Iminocycloalkylrest, C₆-C₂₀-Arylen- oder -Arylenaminorest, C₆-C₂₀Aralkylenrest, C₆-C₂₀-Alkarylen- oder -Iminoarylrest und Kombinationen davon; und
R₂ und R₃ jeweils ausgewählt sind aus einem C₁-C₁₂-Alkylrest, C₆-C₂₀-Cycloalkylrest, C₆-C₂₀-Arylrest, C₆-C₂₀-Aralkylrest, C₆-C₁₆-Alkarylrest und Kombinationen davon;
X ausgewählt ist aus H, OCN-Q-NRCO-, HNR₁-D-NR₁-Q'- und E-Q'-, wobei R, D, R₁, Q und Q' wie oben definiert sind;
Z ausgewählt ist aus -Y-X, -NR₁-D-NR₁-X und E, wobei Y, X, R₁ und D wie oben definiert sind,
wobei das obige E ein Rest eines Monoamin-Monomers oder ein Rest eines Monoiminosilan-Endcappers ist, wobei der Rest des Monoamin-Monomers eine allgemeine Formel aufweist: -N(Rₑ)R_{f} und der Rest des Monoiminosilan-Endcappers eine allgemeine Formel aufweist: -N(Rₑ)-R_{g}-Si(Rₐ)_{y}(OR_{b})_{3-y}, wobei Rₑ, Rₐ, R_{b} und y wie oben definiert sind; R_{f} ausgewählt ist aus einem C₁-C₁₂-Alkylrest, C₆-C₂₀-Cycloalkylrest, C₆-C₂₀-Arylrest, C₆-C₂₀-Aralkylrest, C₆-C₂₀-Alkarylrest und Kombinationen davon; R_{g} ein zweiwertiger Rest ist, der ausgewählt ist aus einem C₁-C₁₂-Alkylenrest, C₆-C₂₀-Cycloalkylenrest, C₆-C₂₀-Arylenrest, C₆-C₂₀-Aralkylenrest, C₆-C₂₀-Alkarylenrest und Kombinationen davon,
wobei das Verfahren folgende Schritte umfasst:
(1) Reagieren einer zwei oder mehr Isocyanat-funktionelle Gruppen aufweisenden Polyisocyanat-Komponente A mit einer zwei Amino-oder Iminogruppen aufweisenden Polysiloxan-Komponente B, um ein Isocyanat-verkapptes Vorpolymer zu erhalten; und
(2) weiteres Reagieren nach Zusetzen einer zwei oder mehr Amino-, Imino-, Hydrazino- und/oder Alkylhydrazino- und 0 bis 3 Alkoxygruppen aufweisenden Silan-Komponente C, um das Organosilicium-Polyharnstoff-Basispolymer zu erhalten.

2. Verfahren nach Anspruch 1, wobei das durch Reagieren der Komponenten A und B erhaltene Vorpolymer ein gewichtsmittleres Molekulargewicht von 2,9 x 10² bis 2,0 x 10⁵ und einen Molekulargewichts-Verteilungsindex von 1 bis 3 aufweist.

3. Verfahren nach Anspruch 1, wobei die Polyisocyanat-Komponente A zwei bis vier Isocyanat-funktionelle Gruppen aufweist und/oder die Silan-Komponente C zwei bis vier Amino-, Imino-, Hydrazino- und/oder Alkylhydrazino- und 0 bis 3 Alkoxygruppen aufweist.

4. Verfahren nach irgendeinem der Ansprüche 1-3, wobei die Reaktion in einer Lösung durchgeführt wird oder wobei die Reaktion eine lösungsmittelfreie Massereaktion ist.

5. Verfahren nach irgendeinem der Ansprüche 1-3, wobei die Polyisocyanat-Komponente A ausgewählt ist aus den folgenden Monomeren, Oligomeren davon, Derivaten davon und Mischungen davon, wobei die Monomere ausgewählt sind aus: Diphenylmethandiisocyanat, Isophorondiisocyanat, Hexamethylendiisocyanat, Dicyclohexylmethandiisocyanat, Naphthalendiisocyanat, p-Phenylendiisocyanat, Cyclohexylendiisocyanat, Xylylendiisocyanat, Tetramethyl-m-xylylendiisocyanat, 2,5(2,6)-Di(isocyanatomethyl)-bicyclo[2,2,1]heptan, Norbornandiisocyanat, 4,4'-Methylen-bis-phenyldiisocyanat, Tolylendiisocyanat, 1,6-Hexamethylendiisocyanat, Tetramethylphenyldimethylendiisocyanat, Triphenylmethandiisocyanat, Methylcyclohexyldiisocyanat, Triisocyanaten und Tetraisocyanaten sowie Polymethylenpolyphenylpolyisocyanaten.

6. Verfahren nach irgendeinem der Ansprüche 1-3, wobei die Polysiloxan-Komponente B die folgende Formel aufweist: 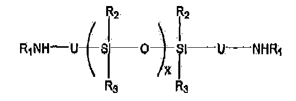 wobei: x und U wie in Anspruch 1 definiert sind;
R₁ ausgewählt ist aus Wasserstoff, einem C₁-C₁₂-Alkylrest, C₆-C₂₀-Cycloalkylrest, C₆-C₂₀-Arylrest, C₆-C₂₀-Aralkylrest, C₆-C₂₀-Alkarylrest und Kombinationen davon;
R₂ und R₃ jeweils ausgewählt sind aus einem C₁-C₁₂-Alkylrest, C₆-C₂₀-Cycloalkylrest, C₆-C₂₀-Arylrest, C₆-C₂₀-Aralkylrest, C₆-C₂₀-Alkarylrest und Kombinationen davon.

7. Verfahren nach irgendeinem der Ansprüche 1-3, wobei die Polysiloxan-Komponente B ein gewichtsmittleres Molekulargewicht von 1,92 x 10² bis 1,0 x 10⁵ und einen Molekulargewichts-Verteilungsindex von 1 bis 3 aufweist.

8. Verfahren nach Anspruch 6, wobei die Polysiloxan-Komponente B ausgewählt ist aus Aminopropyldimethyl-terminiertem Polydimethylsiloxan, Cyclohexylaminopropyldimethyl-terminiertem Polymethylphenylsiloxan, Aminomethyldimethyl-terminiertem Polydimethylsiloxan, Aminopropyldimethoxyl-terminiertem Polydimethylsiloxan, Aminomethyldiethoxy-terminiertem Polydimethylsiloxan, Aminomethylvinylmethoxy-terminiertem Polydimethylsiloxan, Ethylaminopropylmethylethoxy-terminiertem Polydimethylsiloxan, Phenylaminopropyldiethoxy-terminiertem Polymethylpropylsiloxan, N-Phenylaminopropyldimethoxy-terminiertem Polymethylphenylsiloxan, N-Methylaminopropyldimethyl-terminiertem Polydimethylsiloxan und
Aminopropyldimethyl-terminiertem Polymethylphenylsiloxan und Kombinationen davon.

9. Verfahren nach irgendeinem der Ansprüche 1-3, wobei die Silan-Komponente C ein Monomer ist, das von der Struktur der folgenden Formel oder Mischung davon umfasst ist:
HN(Rₑ)R_{d}NH-R_{c}-Si(Rₐ)_{y}(OR_{b})_{3-y}
wobei Rₐ, R_{b}, Rₑ, R_{d}. Rₑ und y wie in Anspruch 1 definiert sind.

10. Verfahren nach Anspruch 9, wobei die Silan-Komponente C ausgewählt ist aus Aminoethylaminopropyltrimethoxysilan, Aminoethylaminopropyltriethoxysilan, Aminoethylaminopropylmethyldimethoxysilan, Aminoethylaminopropylmethyldiethoxysilan, Aminoethylaminomethyltriethoxysilan, Aminoethylaminomethylmethyldiethoxysilan, Hexamethylendiaminomethyltrimethoxysilan, γ-Divinyltriaminopropyltriethoxysilan, γ-Divinyltriaminopropylmethyldiethoxysilan, γ-Divinyltriaminomethyltriethoxysilan, γ-Divinyltriaminomethylmethyldiethoxysilan, Hydrazinopropyltriethoxysilan, Hydrazinopropylmethyldiethoxysilan, Hydrazinomethyltriethoxysilan, Hydrazinomethyltrimethoxysilan, Hydrazinomethylmethyldimethoxysilan, Hydrazinomethylmethyldiethoxysilan und Mischungen davon.

11. Verfahren nach irgendeinem der Ansprüche 1-3, wobei in Schritt (1) oder (2) ein zusätzlicher Kettenverlängerer zugesetzt wird, welcher eine allgemeine Formel NH(Rₑ)R_{d}NH(Rₑ) aufweist, wobei R_{d} und Rₑ wie in Anspruch 1 definiert sind und wobei die zwei Rₑ entweder gleich oder verschieden sind, wobei gegebenenfalls die Menge des zusätzlichen Kettenverlängerers bezogen auf das Gesamtgewicht der reaktiven Komponenten zur Herstellung des Basispolymers 0,01 bis 10 Gew.-% beträgt.

12. Verfahren nach irgendeinem der Ansprüche 1-3, wobei die Menge der Komponente A bezogen auf das Gesamtgewicht der reaktiven Komponenten zur Herstellung des Basispolymers 0,1 bis 60 Gew.-% beträgt und/oder wobei die Menge der Komponente B bezogen auf das Gesamtgewicht der reaktiven Komponenten zur Herstellung des Basispolymers 30 bis 99,9 Gew.-% beträgt und/oder wobei die Menge der Komponente C bezogen auf das Gesamtgewicht der reaktiven Komponenten zur Herstellung des Basispolymers 0,01 bis 60 Gew.-% beträgt.

13. Verfahren nach irgendeinem der Ansprüche 1-3, wobei das Mengenverhältnis der Komponenten A, B und C die folgende Bedingung erfüllt: das Molverhältnis zwischen dem Isocyanatrest und der Summe aller Amino-, Imino-, Hydrazino- und Alkylhydrazinoreste, welche mit Polyisocyanat reaktiv sind, beträgt 0,5-3:1.

14. Verfahren nach irgendeinem der Ansprüche 1-3, wobei in Schritt (1) oder (2) ein Endcapper zugesetzt wird, dessen Menge bezogen auf das Gesamtgewicht der reaktiven Komponenten zur Herstellung des Basispolymers 0,01 bis 30 Gew.-% beträgt, wobei gegebenenfalls der Endcapper ein Monoaminosilan ist, welches in einer Menge, bezogen auf die Silan-Komponente C, von 1 bis 50 Gew.-% verwendet wird.

15. Verfahren nach Anspruch 4, welches **dadurch gekennzeichnet ist, dass** ein in der Lösungsreaktion verwendetes Lösungsmittel aus Tetrahydrofuran, Toluol, Dimethylformamid, Dimethylacetamid oder einem gemischten Lösungsmittel davon ausgewählt ist, wobei gegebenenfalls das Volumenverhältnis des gemischten Lösungsmittels Tetrahydrofuran:Toluol = 3-0,1:1 oder Tetrahydrofuran:Dimethylformamid = 4-0,2:1 oder Tetrahydrofuran:Dimethylacetamid = 4-0,3:1 beträgt.

16. Verfahren nach Anspruch 4, wobei die Massereaktion in einem Mischextruder oder einer Extrusionspistole durchgeführt wird

17. Verfahren nach Anspruch 4, wobei die Reaktionstemperatur in der Lösungspolymerisation 0 bis 150 °C beträgt und unter dem Siedepunkt der Lösung gehalten werden muss oder die Reaktionstemperatur in der Massepolymerisation 0 bis 250 °C beträgt.

18. Verfahren nach Anspruch 4, wobei der Reaktionsdruck in der Lösungspolymerisation 0,1 bis 5 atm beträgt oder der Reaktionsdruck in der Massepolymerisation 0,01 bis 10 atm beträgt.

19. Verfahren nach Anspruch 4, wobei die Reaktionszeit in der Lösungspolymerisation 1 bis 24 Stunden beträgt, wobei gegebenenfalls die Reaktionszeit in den Schritten (1) und (2) 0,5 bis 10 Stunden bzw. 0,5 bis 14 Stunden beträgt.

20. Verfahren nach Anspruch 4, wobei die Reaktionszeit in der Massepolymerisation 0,02 bis 10 Stunden beträgt, wobei gegebenenfalls die Reaktionszeit in den Schritten (1) und (2) 0,01 bis 4 Stunden bzw. 0,01 bis 6 Stunden beträgt.

21. Organosilicium-Polyharnstoff-Elastomer, erhalten durch Vernetzung des durch ein Verfahren nach irgendeinem der Ansprüche 1 bis 20 hergestellten Basispolymers.

22. Elastomer nach Anspruch 21, wobei die Vernetzung unter feuchten Umgebungsbedingungen durchgeführt wird und/oder wobei die Vernetzung durch Zusetzen von Wasser in einer Menge von 0,01 bis 1 Gew.-% des Basispolymers beschleunigt wird.

23. Elastomer nach Anspruch 21, wobei die Vernetzung in Gegenwart eines Silan-Vernetzers mit zwei oder mehr Alkoxygruppen durchgeführt wird, wobei die Menge des Silan-Vernetzers bezogen auf das Gesamtgewicht des Basispolymers 0,01 bis 30 Gew.% beträgt, wobei gegebenenfalls der Silan-Vernetzer ausgewählt ist aus Ethylorthosilicat, Methyltrimethoxysilan, Aminoethylaminopropylmethyldiethoxysilan, N-Anilinomethyltrimethoxysilan und Mischungen davon.

24. Elastomer nach Anspruch 21, wobei die Vernetzung in Gegenwart einer katalytisch wirksamen Menge eines Katalysators durchgeführt wird, wobei der Katalysator gegebenenfalls ausgewählt ist aus Schwefelsäure, Salzsäure, Essigsäure, Oxalsäure, Trichloressigsäure, Methylbenzolsulfonsäure, Triethylamin, Triethylendiamin, tertiären Aminen, silylierten Aminen, Zinn(II)-caprylat, Dibutyldilaurat, Alkylzinn, Alkylaluminium, Alkoxiden, Siloxiden, Vanadium(V)-oxid, Tetraisopropylzirconiumoxid und Mischungen davon.

25. Elastomer nach Anspruch 21, wobei die Vernetzung bei Raumtemperatur durchgeführt wird oder wobei die Vernetzung unter Erwärmungsbedingungen durchgeführt wird, wobei die Erwärmungstemperatur 25 bis 250 °C beträgt.

26. Elastomer nach Anspruch 21, ferner umfassend einen festen Füllstoff, der ausgewählt ist aus Kieselsäure, Titandioxid, Eisenoxid, Calciumcarbonat, Ruß und Mischungen davon in irgendeinem Verhältnis, wobei gegebenenfalls die Menge des Füllstoffs bezogen auf das Gesamtgewicht des Elastomers 0,1 bis 60 Gew.-% beträgt

27. Verwendung eines durch ein Verfahren nach irgendeinem der Ansprüche 1 bis 20 hergestellten Organosilicium-Polyharnstoff-Basispolymers bei der Herstellung von Dichtmitteln, Klebstoffen, Dichtungen, Pufferschichten und Beschichtungen.

28. Verwendung eines Elastomers nach irgendeinem der Ansprüche 21 bis 26 für Dichtmittel, Klebstoffe, Dichtungen, Pufferschichten und Beschichtungen.

## Revendications

1. Procédé de préparation d'un polymère de base d'organosilicium-polyurée capable d'autoréticulation sous condition humide, qui est **caractérisé par** la formule suivante: 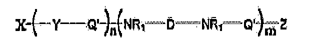 où:
m, n sont respectivement un nombre entier de 1 à 750 ;
Q'= CO-NR-Q-NR-CO, où : Q est une fraction divalente choisie parmi un radical arylène en C₆-C₂₀, un radical aralkylène en C₆-C₂₀, un radical alkylène en C₁-C₂₀, un cycloalkylène en C₆-C₂₀, et les combinaisons de ceux-ci ; et R est un hydrogène ou un radical alkyle en C₁-C₁₂ ;
R₁ est choisi parmi un hydrogène, un radical alkyle en C₁-C₁₂, un radical cycloalkyle en C₆-C₂₀, un radical aryle en C₆-C₂₀, un radical aralkyle en C₆-C₂₀. un radical alkaryle en C₆-C₂₀ et les combinaisons de ceux-ci ;
Y est embrassé par la structure : 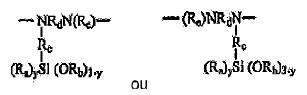 où : Rₐ et R_{b} sont respectivement choisis parmi un radical alkyle en C₁-C₁₆, un radical aryle en C₆-C₂₀. un radical aralkyle en C₆-C₂₀, un radical alkaryle en C₆-C₂₀, et les combinaisons de ceux-ci ; y = 0 à 3 ; R_{c} est une fraction divalente choisie parmi un radical alkylène en C₁-C₁₂, un radical alkylène en C₁-C₁₂ contenant un imino, un radical arylène en C₆-C₂₀ contenant un imino, un radical aralkylène en C₆-C₂₀, un radical alkarylène en C₆-C₂₀, et les combinaisons de ceux-ci ;
R_{d} est une liaison directe, ou une fraction divalente choisie parmi un radical alkylène en C₁-C₁₂, un radical alkylène en C₁-C₁₂ contenant un imino, un radical arylène en C₆-C₂₀ contenant un imino, un radical aralkylène en C₆-C₂₀, un radical alkarylène en C₆-C₂₀, et les combinaisons de ceux-ci ; et
Rₑ est choisi parmi un hydrogène, un radical alkyle en C₁-C₁₂, un radical alkyle en C₁-C₁₂ contenant un imino, un radical aryle en C₆-C₂₀ contenant un imino, un radical aralkyle en C₆-C₂₀, un radical alkaryle en C₆-C₂₀, et les combinaisons de ceux-ci ;
D est embrassé par la structure : 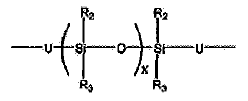 dans laquelle : x varie de 1 à 2 000 ;
U est une fraction divalente choisie parmi un radical alkylène en C₁-C₁₂, un radical iminoalkyle ou polyiminoalkyle en C₁-C₁₂, un radical cydoalkyléne en C₆-C₂₀, un radical iminocycloalkyle en C₆-C₂₀, un radical arylène ou aryléneamino en C₆-C₂₀, un radical aralkylène en C₆-C₂₀, un radical alkarylène ou iminoaryle en C₆-C₂₀, et les combinaisons de ceux-ci ; et
R₂ et R₃ sont respectivement choisis parmi un radical alkyle en C₁-C₁₂, un radical cycloalkyle en C₆-C₂₀, un radical aryle en C₆-C₂₀, un radical aralkyle en C₆-C₂₀, un radical alkaryle en C₆-C₁₆ et les combinaisons de ceux-ci ;
X est choisi parmi H, OCN-Q-NRCO-, HNR₁-D-NR₁-Q'- et -E-Q'-, où R, D, R₁, Q et Q' sont définis comme ci-dessus ;
Z est choisi parmi -Y-X, -NR₁-D-NR₁-X, et E, où Y, X, R₁ et D sont définis comme ci-dessus ;
où le E ci-dessus est un résidu de monomère monoamine ou un résidu de monoimino silane agent de coiffage, avec le résidu de monomère monoamine ayant une formule générale : - N(Rₑ) R_{f}, et le résidu de monoimino silane agent de coiffage ayant une formule générale : -N(Rₑ) R_{g}-Si(Rₑ)_{y}(OR_{b})_{3-y}, où Rₑ, Rₐ, R_{b} et y sont définis comme ci-dessus ; R_{f} est choisi parmi un radical alkyle en C₁-C₁₂, un radical cycloalkyle en C₆-C₂₀, un radical aryle en C₅-C₂₀, un radical aralkyle en C₆-C₂₀, un radical alkaryle en C₆-C₂₀, et les combinaisons de ceux-ci ; Rg est une fraction divalente choisie parmi un radical alkyléne en C₁-C₁₂, un radical cycloalkylène en C₆-C₂₀, un radical arylène en C₆-C₂₀, un radical aralkylène en C₆-C₂₀, un radical alkarylène en C₆-C₂₀, et les combinaisons de ceux-ci,
lequel procédé comprend les étapes de :
(1) réaction d'un composant polyisocyanate A ayant deux groupes fonctionnels isocyanates ou plus avec un composant polysiloxane B ayant deux groupes amino ou imino, pour obtenir un prépolymère coiffé d'un isocyanato ; et
(2) réaction supplémentaire après l'ajout d'un composant silane C ayant deux groupes amino, imino, hydrazino, et/ou alkylhydrazino ou plus et de 0 à 3 groupes alcoxy, pour obtenir le polymère de base d'organosilicium-polyurée.

2. Procédé tel que revendiqué selon la revendication 1, dans lequel le prépolymère obtenu par réaction des composants A et B a un poids moléculaire moyen en poids de 2,9 x 10² à 2,0 x 10⁵, et un indice de distribution de poids moléculaire de 1 à 3.

3. Procédé tel que revendiqué selon la revendication 1, dans lequel ledit composant polyisocyanate A a deux à quatre groupes fonctionnels isocyanates ; et/ou ledit composant silane C a deux à quatre amino, imino, hydrazino, et/ou alkylhydrazino et de 0 à 3 groupes alcoxy.

4. Procédé tel que revendiqué selon l'une quelconque des revendications 1 à 3, dans lequel la réaction est réalisée en solution ou dans lequel la réaction est une réaction en masse sans solvant.

5. Procédé tel que revendiqué selon l'une quelconque des revendications 1 à 3, dans lequel le composant polyisocyanate A est choisi parmi les monomères, les oligomères de ceux-ci, les dérivés de ceux-ci, et les mélanges de ceux-ci suivants, lesdits monomères sont choisis parmi : le diisocyanate, de diphénylméthane, le diisocyanate d'isophorone, le diisocyanate, d'hexaméthylène, le diisocyanate de dicyclohexylméthane, le diisocyanate de naphtalène, le diisocyanate de p-phénylène, le diisocyanate de cyclohexylène, le diisocyanate de xylylène, le diisocyanate de tétraméthyl-m-xylylène, le 2,5(2,6)-di(isocyanatométhyl)-bicyclo[2,2,1]heptane, le diisocyanate de norbornane, le 4,4'-méthylène-bis-phényl-diisocyanate, le diisocyanate de tolylène, le diisocyanate de 1,6-hexaméthylène, le diisocyanate, de tétraméthylphényldiméthylène, le diisocyanate de triphénylméthane, le diisocyanate de méthylcyclohexyle, les triisocyanates, et les tétraisocyanates, et les polyisocyanates de polyméthylènepolyphényle.

6. Procédé tel que revendiqué selon l'une quelconque des revendications 1 à 3, dans lequel le composant polysiloxane B a la formule suivante : 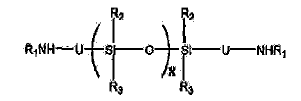 où : x et U sont définis comme dans la revendication 1 ;
R₁ est choisi parmi un hydrogène, un radical alkyle en C₁-C₁₂, un radical cycloalkyle en C₆-C₂₀, un radical aryle en C₆-C₂₀, un radical aralkyle en C₆-C₂₀, un radical alkaryle en C₆-C₂₀ et les combinaisons de ceux-ci ;
R₂ et R₃ sont respectivement choisis parmi un radical alkyle en C₁-C₁₂, un radical cycloalkyle en C₆-C₂₀, un radical aryle en C₆-C₂₀, un radical aralkyle en C₆-C₂₀, un radical alkaryle en C₆-C₂₀, et les combinaisons de ceux-ci.

7. Procédé tel que revendiqué selon l'une quelconque des revendications 1 à 3, dans lequel le composant polysiloxane B a un poids moléculaire moyen en poids de 1,92 x 10² à 1,0 x 10⁵, et un indice de distribution de poids moléculaire de 1 à 3.

8. Procédé tel que revendiqué selon la revendication 6, dans lequel le composant polysiloxane B est choisi parmi un polydiméthylsiloxane à terminaison aminopropyl diméthyle, un polyméthylphénylsiloxane à terminaison cyclohexylaminopropyl diméthyle, un polydiméthylsiloxane à terminaison aminométhyl diméthyle, un polydiméthylsiloxane à terminaison aminopropyl diméthoxyle, un polydiméthylsiloxane à terminaison aminométhyl diéthoxy, un polydiméthylsiloxane à terminaison aminométhyl vinylméthoxy, un polydiméthylsiloxane à terminaison éthyl aminopropyl méthyléthoxy, un polyméthylpropylsiloxane à terminaison phénylaminopropyl diéthoxy, un polyméthylphénylsiloxane à terminaison N-phénylaminopropyl diméthoxy, un polydiméthylsiloxane à terminaison N-méthyl-aminopropyl diméthyle, et un polyméthylphénylsiloxane à terminaison aminopropyl diméthyle, et les combinaisons de ceux-ci.

9. Procédé tel que revendiqué selon l'une quelconque des revendications 1 à 3, dans lequel le composant silane C est un monomère embrassé par la structure de la formule suivante ou un mélange de celui-ci :
MN(Rₑ)R_{d}NH-R_{c}-Si(Rₐ)_{y}(OR_{b})_{3-y}
où, Rₐ, R_{b}, R_{c}, R_{d}, Rₑ et y sont définis comme dans la revendication 1.

10. Procédé selon la revendication 9, dans lequel le composant silane C est choisi parmi l'aminoéthyl aminopropyl triméthoxy silane, l'aminoéthyl aminopropyl triéthoxy silane, l'aminoéthyl aminopropylméthyl diméthoxy silane, l'aminoéthyl aminopropylméthyl diéthoxy silane, l'aminoéthyl aminométhyl triéthoxy silane, l'aminoéthyl aminométhyl méthyl diéthoxy silane, l'hexaméthylénediamino méthyl triméthoxy silane, le γ-divinyltriaminopropyl triéthoxy silane, le γ-divinyltriaminopropyl méthyl diéthoxy silane, le γ-divinyltriaminométhyl triéthoxy silane, le γ-divinyltriaminométhyl méthyl diéthoxy silane, l'hydrazinopropyl triéthoxy silane, l'hydrazinopropyl méthyl diéthoxy silane, l'hydrazinométhyl triéthoxy silane, l'hydrazinométhyl triméthoxy silane, l'hydrazinométhyl méthyl diméthoxy silane, l'hydrazinométhyl méthyl diéthoxy silane, et les mélanges de ceux-ci.

11. Procédé tel que revendiqué selon l'une quelconque des revendications 1à 3, dans lequel un extenseur de chaîne auxiliaire est ajouté à l'étape (1) ou (2), qui a une formule générale : NH(Rₐ)R_{d}NH(Rₑ), où R_{d} et Rₑ sont définis comme dans la revendication 1, et les deux Rₑ sont identiques ou différents, dans lequel éventuellement la quantité d'extenseur de chaîne auxiliaire, sur la base du poids total des composants réactifs pour la préparation du polymère de base, est de 0,01 à 10% en poids.

12. Procédé tel que revendiqué selon l'une quelconque des revendications 1 à 3, dans lequel la quantité de composant A, sur la base du poids total des composants réactifs pour la préparation du polymère de base, est de 0,1 à 60% en poids, et/ou dans lequel la quantité de composant B, sur la base du poids total des composants réactifs pour la préparation du polymère de base, est de 30 à 99,9% en poids et/ou dans lequel la quantité de composant C, sur la base du poids total des composants réactifs pour la préparation du polymère de base, est de 0,01 à 60% en poids.

13. Procédé tel que revendiqué selon l'une quelconque des revendications 1 à 3, dans lequel le rapport des quantités des composants A, B et C satisfait la condition suivante : le rapport molaire du radical isocyanato à la somme de tous les radicaux amino, imino, hydrazino, et alkylhydrazino qui sont réactifs avec le polyisocyanate est de 0,5 à 3:1.

14. Procédé tel que revendiqué selon l'une quelconque des revendications 1 à 3, dans lequel un agent de coiffage est ajouté à l'étape (1) ou (2), dont la quantité, sur la base du poids total des composants réactifs pour la préparation du polymère de base, est de 0,01 à 30% en poids, dans lequel éventuellement l'agent de coiffage est un monoamino silane, qui est utilisé dans une quantité, sur la base du composant silane C, de 1 à 50% en poids.

15. Procédé tel que revendiqué selon la revendication 4, qui est **caractérisé en ce qu'**un solvant utilisé dans la réaction en solution est choisi parmi le tétrahydrofurane, le toluène, le diméthylformamide, le diméthylacétamide, ou un solvant mixte de ceux-ci, dans lequel éventuellement le solvent mixte en rapport volumique est le tétrahydrofurane:toluène = 3 à 0,1:1, ou le tétrahydrofurane:diméthylformamide = 4 à 0,2:1, ou le tétrahydrofurane:diméthylacétamide = 4 à 0,3:1.

16. Procédé tel que revendiqué selon la revendication 4, dans lequel la réaction en masse est réalisée dans une extrudeuse mélangeuse ou un pistolet d'extrusion.

17. Procédé tel que revendiqué selon la revendication 4, dans lequel la température de réaction, dans la polymérisation en solution, est de 0 à 150°C et doit être maintenue au-dessous du point d'ébullition de la solution, ou bien la température de réaction, dans la polymérisation en masse, est de 0 à 250°C.

18. Procédé tel que revendiqué selon la revendication 4, dans lequel la pression de réaction, dans la polymérisation en solution, est de 0,1 à 5 atm ou bien la pression de réaction, dans la polymérisation en masse, est de 0,01 à 10 atm.

19. Procédé tel que revendiqué selon la revendication 4, dans lequel le temps de réaction, dans la polymérisation en solution, est de 1 à 24 heures, dans lequel éventuellement le temps de réaction, aux étapes (1) et (2), sont respectivement de 0,5 à 10 heures et de 0,5 à 14 heures.

20. Procédé tel que revendiqué selon la revendication 4, dans lequel le temps de réaction, dans la polymérisation en masse, est de 0,02 à 10 heures, dans lequel éventuellement le temps de réaction, aux étapes (1) et (2), sont respectivement de 0,01 à 4 heures et de 0,01 à 6 heures.

21. Élastomère d'organosilicium-polyurée obtenu par réticulation du polymère de base préparé par un procédé tel que revendiqué selon l'une quelconque des revendications 1 à 20.

22. Élastomère tel que revendiqué selon la revendication 21, dans lequel la réticulation est réalisée sous condition environnementale humide et/ou dans lequel la réticulation est favorisée par l'ajout d'eau dans une quantité de 0,01 à 1 % en poids du polymère de base.

23. Élastomère tel que revendiqué selon la revendication 21, dans lequel la réticulation est réalisée en présence d'un agent de réticulation silane ayant deux groupes alcoxy ou plus, la quantité dudit agent de réticulation silane étant, sur la base du poids total du polymère de base, de 0,01 à 30% en poids, dans lequel éventuellement l'agent de réticulation silane est choisi parmi l'orthosilicate d'éthyle, le méthyltriméthoxy silane, l'aminoéthyl aminopropyl méthyl diéthoxy silane, le N-anilinométhyl triméthoxy silane, et les mélanges de ceux-ci.

24. Élastomère tel que revendiqué selon la revendication 21, dans lequel la réticulation est réalisée en présence d'une quantité catalytiquement efficace d'un catalyseur, dans lequel éventuellement le catalyseur est choisi parmi l'acide sulfurique, l'acide chlorhydrique, l'acide acétique, l'acide oxalique, l'acide trichloroacétique, l'acide méthylbenzènesulfonique, la triéthylamine, la triéthylènediamine, les amines tertiaires, les amines silylées, le caprylate stanneux, le dilaurate de dibutyle, un alkylétain, un alkylaluminium, les alcoxydes, les siloxydes, l'oxyde vanadique, l'oxyde de tétraisopropyle zirconium et les mélanges de ceux-ci.

25. Élastomère tel que revendiqué selon la revendication 21, dans lequel la réticulation est réalisée à température ambiante ou dans lequel la réticulation est réalisée sous condition de chauffage avec la température de chauffage étant de 25 à 250°C.

26. Élastomère tel que revendiqué selon la revendication 21, comprenant en outre une charge solide choisie parmi la silice, l'oxyde de titane, l'oxyde de fer, le carbonate de calcium, le noir de carbone et les mélanges de ceux-ci en n'importe quelle proportion, dans lequel éventuellement la quantité de la charge est, sur la base du poids total de l'élastomère, de 0,1 à 60% en poids.

27. Utilisation d'un polymère de base d'organosilicium-polyurée préparé par un procédé tel que revendiqué selon l'une quelconque des revendications 1 à 20 dans la préparation de matériaux d'étanchéité, d'adhésifs, de joints, de couches tampons et de revêtements.

28. Utilisation d'un élastomère tel que revendiqué selon l'une quelconque des revendications 21 à 26 pour des matériaux d'étanchéité, des adhésifs, des joints, des couches tampons et des revêtements.
